# EUROPEAN PATENT APPLICATION

(11) **EP 4 725 996 A2**
(43) Date of publication of application: **15.04.2026**
(21) Application number: 25177837.9
(22) Date of filing: 21.05.2025
(51) Int. Cl.: C09D 5/33, C08L 91/00, C08L 91/06, C08L 93/04, C09D 7/45, C09D 7/61, C09D 7/63, C09D 7/65, C09D 7/40

(54) **BINDER COMPOSITIONS FOR THERMOPLASTIC ROAD MARKINGS**

(30) Priority: 22.05.2024 US 202463650519 P
(71) Applicant: Kraton Polymers Nederland B.V., 1322 CE Almere (NL)
(72) Inventor: KRUTZER, Bert, Houston, 77084 (US); BOERMA, Selwyn, Houston, 77084 (US); DE VRIES-ORON, Sherida Astra, Houston, 77084 (US); BROERE, David, Houston, 77084 (US)
(74) Representative: Henkel & Partner mbB

(57) **Abstract**

The disclosure relates to a binder composition comprising a resin, at least one flow modifier selected from a hydrated aluminosilicate and a surfactant, optional a plasticizer, optional wax, and optional an elastomer. The hydrated aluminosilicate contains 5 to 50 wt.% of water. The surfactant is selected from the group consisting of acid-functional surfactants, amine-functional surfactants, metal-containing surfactants, metalloid-containing surfactants, and mixtures thereof. The binder composition has superior bonding property and can be used in a thermoplastic road marking (TRM) composition. The TRM composition shows reduction of viscosity in comparison with a TRM composition without the flow modifier.

## Description

### FIELD

The disclosure relates to a binder composition, methods of preparation, and applications thereof in thermoplastic road marking compositions.

### BACKGROUND

Road marking compositions are designed to provide guidance and information to drivers, pedestrians, and vehicles-particularly in environments involving autonomous or driverless vehicles. Thermoplastic road marking (TRM) compositions, formulated specifically for road applications, consist of resins, binders, plasticizers, fillers, pigments, and other additives.

The application of TRM compositions generally involves pre-heating the powdered mixture to elevated temperatures (e.g., around 200 °C). However, processing these materials presents notable challenges due to their inherently high viscosity. At high temperatures, there is a risk of thermal degradation of individual components, which can lead to diminished color intensity and compromised performance. Binders play a vital role in TRM compositions by affecting their processing characteristics. In particular, binder systems can improve the handling and application of TRM compositions.

There is still a need for binder compositions that can reduce the viscosity of TRM compositions, allowing melt processing at lower temperatures while maintaining desired performance properties.

### SUMMARY

In one aspect, the disclosure relates to a binder composition comprising, consisting essentially of, or consisting of: (a) 65 to 99.95 wt.% of a resin selected from the group consisting of aliphatic hydrocarbon resins (C5), aromatic hydrocarbon resins (C9), rosin resins, rosin esters, alkyd resins, and mixtures thereof; (b) 0.05 to 10 wt.% of at least one flow modifier; (c) 0 to 15 wt.% of a plasticizer; (d) 0 to 15 wt.% of wax; and 0 to 15 wt.% of an elastomer; based on total weight of the binder composition. The flow modifier is selected from (i) a hydrated aluminosilicate having 5 to 50 wt.% of water; and (ii) a surfactant selected from the group consisting of acid-functional surfactants, amine-functional surfactants, metal-containing surfactants, metalloid-containing surfactants, and mixtures thereof. The surfactant has a molar mass of 200 to 2000 g/mol.

In a second aspect, the binder composition, when incorporated into a thermoplastic road marking (TRM) composition, results in the TRM composition having an apparent viscosity that is at least 10% lower than that of a TRM composition without the flow modifier.

In a third aspect, the flow modifier is a hydrated aluminosilicate having 5 to 35% of water. The hydrated aluminosilicate has at least one of: an average particle size of 1 to 500 µm; and a density of 1.0 to 2.5 g/cm³.

In a fourth aspect, a TRM composition comprising, consisting essentially of, or consisting of: (a) 5 to 27 wt.% of a resin selected from the group consisting of aliphatic hydrocarbon resins (C5), aromatic hydrocarbon resins (C9), rosin resins, rosin esters, alkyd resins, and mixtures thereof; (b) 0.01 to 4 wt.% of at least one flow modifier; (c) 15 to 80 wt.% of filler; (d) 2 to 60 wt.% of glass beads; (e) 1 to 15 wt.% of a pigment; (f) 0.5 to 5 wt.% of a plasticizer; (g) 0 to 5 wt.% of wax; (h) 0 to 10 wt.% of an elastomer; and (i) 0 to 10 wt.% of at least one additive, based on total weight of the TRM composition. The flow modifier is selected from (i) a hydrated aluminosilicate having 5 to 50 wt.% of water, and (ii) a surfactant having a molar mass of 200 to 2000 g/mol. The surfactant is selected from the group consisting of acid-functional surfactants, amine-functional surfactants, metal-containing surfactants, metalloid-containing surfactants, and mixtures thereof. The TRM composition has an apparent viscosity that is at least 10% lower than that of a TRM composition without the flow modifier.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Thermoplastic" means a material that has the property of softening or melting and becoming pliable when heated and of hardening and becoming rigid again when cooled.

"Road" or "roadway" or "transportation surface" refers to a surface to which a thermoplastic road marking composition can be applied, including for example, aircraft runways and taxiways, roadways, walkways, bicycle paths, curbs, traffic barriers, barricades, steps, parking lots, metallic surfaces, oil rig decks, roofs, warehouse floors, and transportation-related horizontal, inclined, or vertical surfaces. The surface can be concrete, asphalt, or tile based.

"Road marking" is used interchangeably with "pavement marking," means the application of a marking composition to a pavement.

"Vinyl aromatic unit content" or VAC of a block copolymer refers to the weight % of polymerized vinyl aromatic monomers, e.g., styrene, para-methylstyrene, etc., in the block copolymer, calculated by dividing the sum of molecular weight of all vinyl aromatic units by total molecular weight of the block copolymer. VAC can be determined using proton nuclear magnetic resonance spectroscopy (¹H NMR) and ¹³C NMR. VAC sometimes is used interchangeably with PSC, or polystyrene content.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Coupling efficiency" or CE refers to the weight of coupled polymer molecules divided by the total weight of both coupled and uncoupled polymer molecules, expressed as a percentage (%). CE can be used to determine the amount of diblock or more generally of "uncoupled arms" content in the overall block copolymer. For example, if the coupling efficiency is 80%, the polymer will contain 20 wt.% diblock or uncoupled arms and 80 wt.% triblock and multi-arm species.

"Molecular weight" or Mw refers to the polystyrene equivalent molecular weight in kg/mol of a polymer block or a block copolymer. Mw can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. Mw of polymers measured using GPC so calibrated are polystyrene equivalent molecular weights or apparent molecular weights. Mw expressed herein is measured at the peak of the GPC trace and is commonly referred to as polystyrene equivalent "peak molecular weight," designated as Mₚ.

"Molar mass" refers to the mass of one mole of a substance, expressed in grams per mole (g/mol).

"Binder" refers to a thermoplastic material in the thermoplastic road marking composition that binds the components together and facilitates adhesion to the road surface, while contributing to the composition's melt processability and durability.

"Flow modifier" refers to a material (component) incorporated into the binder composition to enhance its processability and, in turn, reduce the viscosity of the final road marking composition.

"Modified Three-Point Bend" test refers to a test for measuring certain properties of a thermoplastic road marking ("TRM") composition, where a TRM specimen measuring 12 x 12 x 90 mm, is placed on two supports with a span of 64 mm. The specimen may be prepared by extruding or casting the molten TRM composition into a mold, followed by cutting or machining to the required dimensions. During a preloading step, a low preload force (e.g., 2-5 N) is applied to the specimen via the central loading nose to ensure full contact between the specimen and both the supports and the loading fixture. This preload step eliminates initial slack or misalignment and ensures consistent starting conditions. After preloading, the specimen is subjected to a download deflection at a constant rate of 5 mm/minute to 100 mm/minutes, inducing flexural stress. The test continues until the specimen breaks or the machine's end switches are triggered, whichever occurs first. The mechanical parameters (flexural modulus, strength, strain, and toughness) are determined from the loaddeflection curve according to standard definitions, adapted for the test configuration described herein, with toughness referring to the amount of mechanical energy absorbed by the specimen up to the point of fracture.

The present disclosure relates to a binder composition comprising, consisting essentially of, or consisting of: (a) a resin; (b) a flow modifier; (c) an optional plasticizer; (d) optional wax; and (e) an optional elastomer. The binder composition exhibits excellent bonding properties and is suitable for use in a thermoplastic road marking (TRM) composition. The TRM composition with the binder demonstrates improved processability due to the viscosity reduction provided by the binder composition, allowing melt-processing at a lower temperature.

(Resins): The resin is selected from the group consisting of aliphatic hydrocarbon resins (C5), aromatic hydrocarbon resins (C9), rosin resins, rosin esters, alkyd resins, and mixtures thereof.

In embodiments, the resin is a hydrocarbon resin, saturated or unsaturated, selected from the group consisting of C₅ aliphatic hydrocarbon resins, C₉ aromatic hydrocarbon resins, and mixtures thereof. Examples of C₅ aliphatic hydrocarbon resins include trans-1,3-pentadiene, cis-1,3-pentadiene, 2-methyl-2-butene, 2-methyl-1,3-butadiene, dicyclopentadiene, cyclopentadiene, cyclopentene, and mixtures thereof. Examples of C₉ aromatic hydrocarbon resins include vinyltoluenes, indene, methylstyrene, and mixtures thereof.

In embodiments, the resin is a rosin resin selected from gum rosin, wood rosin, tall oil rosin, partially hydrogenated rosin, fully hydrogenated rosin (e.g., hydrogel), disproportionated rosin, dimerized or oligomerized rosin, modified rosin resins (e.g., phenolic-modified rosin, alkylated rosin, rosin-maleic anhydride adducts, rosin fumaric acid adducts, rosin-acrylate copolymers, etc.), and mixtures thereof. The rosin resin can comprise one or more components selected from the group consisting of abietic acid, neoabietic acid, dehydroabietic acid, levopimaric acid, pimaric acid, palustric acid, isopimaric acid, and sandarocopimaric acid.

In embodiments, the resin is an alkyd resin selected from the group consisting of urethane-modified alkyd, rosin-modified alkyd, silicone-modified alkyd, epoxy-modified alkyd, phenolic-modified alkyd, maleic-modified alkyd, styrenated alkyd, and mixtures thereof.

In embodiments, the resin is a rosin ester obtained from a reaction of one or more rosin acids with one or more alcohols, e.g., methanol, triethylene glycol, glycerol, pentaerythritol, etc. Examples of rosin esters include hydrogenated hydrocarbon rosin esters, acrylic rosin esters, disproportionated rosin esters, dibasic acid modified rosin esters, glycerol ester of rosin, pentaerythritol ester of rosin, triethylene glycol ester of rosin, methyl ester of rosin, maleated rosin esters, trimethylolpropane rosin ester, sorbitol rosin ester, butyl rosin ester, isobutyl rosin ester, ethyl rosin ester, maleic anhydride rosin ester, alkyd-modified rosin ester, phenolic-modified rosin ester, pimaric acid rosin ester, and mixtures thereof.

In embodiments, the rosin ester resin having a softening point of 80 - 115°C, or 90 - 110°C, or 95 - 105°C, or > 95°C, or < 110°C, measured according to ASTM E28. In embodiments, the rosin ester has a Gardner color of 0 - 5.0, or 0.1 - 4.5, or 0.5 - 4.0, or > 0, or < 4, measured according to ASTM D6166. In embodiments, the rosin ester has an acid value of 1 - 50, or 3 - 15, or 4 - 12, or 5 - 10, or > 3, or < 10 mg KOH/g, measured according to ASTM D465. In embodiments, the rosin ester has a glass transition temperature (T_{g}) of 30 - 80°C, or 35 - 75°C, or 40 - 70°C, or 45 - 60°C, or > 40°C, or < 65°C, measured by differential scanning calorimetry (DSC).

In embodiments, the resin is used in amounts of 65 - 99.95, or 70 - 95, or 75 - 96, or 80 - 97 wt.%, based on total weight of the binder composition.

(Flow Modifiers): The flow modifier is selected from any of a hydrated aluminosilicate, a surfactant, and mixtures thereof, added in amounts of 0.05 - 10, or 0.07 - 5, or 0.05 - 4, or 0.5 - 3 wt.%, based on total weight of the binder composition.

(Hydrated Aluminosilicates): In embodiments, the flow modifier is a hydrated aluminosilicate which inherently contains water, and which is released upon heating. The water molecules are part of the crystal structure, either physically trapped within the pores or bonded to the framework of the material. The hydrated aluminosilicate promotes time-released micro bubbles foaming upon being incorporated into a road marking composition. In embodiments, the hydrated aluminosilicate contains at least 5 wt.%, or 5 - 50, or 10 - 40, or 5 - 35, or 10 - 30, or 20 - 30 wt.% of water, based on total weight of the hydrated aluminosilicate, with the remainder being hydrated aluminosilicate.

In embodiments, the hydrated aluminosilicate has an average particle size of 1 - 500 µm, or 3 - 400 µm, or 2 - 380 µm, or 250 - 400 µm, or 340 - 400 µm.

In embodiments, the hydrated aluminosilicate has a density of 1.0 - 2.5, or 1.25 - 2.30, or 1.5 - 2.25, or 1.90 - 2.20, or 1.95 - 2.10 g/cm³.

In embodiments, the hydrated aluminosilicate has a compaction density of 200 - 800, or 300 - 700, or 400 - 600, or 350 - 650 g/l.

In embodiments, the hydrated aluminosilicate has a pH value of 9.5 - 13, or 10 - 12.5, or 10.5 - 12, measured in deionized water (with 5 wt.% concentration of hydrated aluminosilicate).

(Surfactants): In embodiments, the flow modifier is a surfactant selected from the group consisting of acid-functional surfactants, amine-functional surfactants, metal-containing surfactants, metalloid-containing surfactants, and mixtures thereof.

In embodiments, the surfactant is an acid-functional surfactant selected from the group consisting of sodium stearoyl lactylate, fatty acid soaps (e.g., sodium stearate, potassium oleate), tall oil fatty acid (TOFA), sodium lauroyl sarcosinate, 2-octadec-9-enoxyethanol phosphoric acid, oleyl alcohol ethoxylate phosphate, trideceth-10 phosphate or laureth-4 phosphate, octadecanoic acid reaction product with tetraethylenepentamine, stearic acid reaction product with ethylenediamine, oleic acid reaction product with triethylenetetramine, and combination thereof.

In embodiments, the surfactant is an amine-functional surfactant. Examples of the amine-functional surfactant include cetyltrimethylammonium bromide (CTAB), dodecyltrimethylammonium chloride (DTAC), tetradecyltrimethylammonium bromide (TTAB), stearamidopropyl dimethylamine, lauramidopropyl dimethylamine, cocamidopropyl betaine, dodecylamine hydrochloride, N-alkyl-1,3-propane diamine, lauryl hydroxysultaine, cocamidopropyl hydroxysultaine, amphoteric amine oxides (e.g., lauramine oxide, myristamine oxide, etc.), and mixtures thereof.

In embodiments, the surfactant is a metal-containing surfactant selected from sodium stearate; potassium oleate; calcium dodecylbenzenesulfonate; magnesium lauryl sulfate; lithium stearate; zinc ricinoleate; zinc stearate; aluminum stearate; cobalt (II) stearate; nickel (II) laurate; copper (II) oleate; titanium IV 2, 2(bis 2-propenolatomethyl)butanolato, tris(dodecyl)benzenesulfonato-O; titanium IV bis(dioctyl)pyrophosphato-O, oxoethylenediolato, (adduct), (dioctyl) (hydrogen)phosphite; titanate IV, isopropyl tri(dioctyl)phosphate; titanate IV, neopentyl(diallyl)oxy, tri(dioctyl)phosphate; titanate IV, di(dioctyl)pyrophosphato, oxyacetato; titanate IV, tris(dodecylbenzenesulfonato), triethanolaminoato; titanate IV, bis(dioctyl)pyrophosphato-O, 2-ethylhexyl phosphate; zirconate IV, neopentyl(diallyl)oxy, tri(dioctyl)phosphate; aluminate, di(dioctyl)phosphatoethyl, triethanolamine complex; and mixtures thereof.

In embodiments, the surfactant is a metalloid-containing surfactant selected from silicone quaternary ammonium compounds, boronate-modified amphiphilic molecules, boronic acid-functionalized surfactants, sodium lauryl borate, arsenic-containing phospholipids, organoarsenic surfactants (e.g., arsonolipids), germanium alkoxides (e.g., tetraethylgermanium, tege), germanium-modified siloxanes, antimony carboxylates (e.g., antimony stearate), organoantimony amphiphiles, n-propyltrimethoxysilane, n-butyltriethoxysilane, n-octyltriethoxysilane, isobutyltrimethoxysilane, hexadecyltrimethoxysilane, octadecyltrichlorosilane, n-octyltrimethoxysilane, vinylbenzyl-aminoethyl-aminopropyl-trimethoxysilane, and mixtures thereof.

In embodiments, other surfactants are used in place of or in addition to the above-described surfactants. Examples include oleic imidazoline, stearic imidazoline, lauric imidazoline, ethoxylated oleic imidazoline, ethoxylated stearic imidazoline, octyl imidazoline, dodecyl imidazoline, octadecyl imidazoline, cocoyl imidazoline, cocoamine imidazoline, cetyltrimethylammonium bromide, cocoamidopropylamine oxide, dodecylamine, triethanolamine, laurylamine, cocamide diethanolamine, ethoxylated fatty amide, oleamide diethanolamine, cocamidopropyl betaine, ethylene bis-stearamide, lauryl betaine, sorbitan esters, polysorbates, glyceryl esters, alkyl polyglucosides, lecithin, sodium lauroyl lactylate, alkyl ether sulfates, alkylphenol ethoxylates, poloxamers, sorbitan esters ethoxylates, alkyl polyglycosides, ethoxylated polyethyleneimine, ethoxylated polypropyleneimine, ethoxylated polyethyleneimine oxides, ethoxylated polypropyleneimine oxides, n,n,n-trimethyl-n-(2-hydroxyethyl)ammonium propionate, n,n,n-trimethyl-n-(2-hydroxyethyl)ammonium laurate, n,n,n-trimethyl-n-(2-hydroxyethyl)ammonium palmitate, ethoxylated fatty acid polyamine condensates, polyamine-based betaines derived from amidopropylamines, polyamine-based ethoxylates with varying degrees of ethoxylation, etc.

In embodiments, the surfactant is selected from the group consisting of: fatty acids, fatty acid derivatives, amine-functional fatty acid reaction product, phosphate esters, phosphite esters of a fatty alcohol or ether, organotitanate compounds, organosilanes, and mixtures thereof.

Examples of fatty acid derivatives include methyl esters, ethyl esters, glycerides, sorbitan esters, polyol esters, fatty acid methyl esters, fatty acid anhydrides, fatty acid ethoxylates, fatty acid succinates, maleated fatty acids or esters, epoxidized fatty esters, and the like.

In embodiments, the surfactant has a molar mass of 200 - 2000, or 220 - 1600, or 250 - 1400, or 260 - 1300, or > 230, or < 1400 g/mol.

(Optional Plasticizers): In embodiments, the binder composition further comprises at least one plasticizer selected from the group consisting of plant oil, vegetable oil, process oil, mineral oil, phthalates, and mixtures thereof. It should be noted that the plasticizer instead of being added to the binder composition, can be added directly to the TRM composition as one of the TRM components.

Examples of process oil comprises one or more components selected from paraffinic oil, naphthenic oil, aromatic oil, and mixtures thereof.

Examples of phthalates include dimethyl phthalate, diethyl phthalate, diallyl phthalate, di-n-propyl phthalate, di-n-butyl phthalate, diisobutyl phthalate, butyl cyclohexyl phthalate, di-n-pentyl phthalate, dicyclohexyl phthalate, butyl benzyl phthalate, di-n-hexyl phthalate, diisohexyl phthalate, diisoheptyl phthalate, butyl decyl phthalate, butyl(2-ethylhexyl) phthalate, di(n-octyl) phthalate, diisooctyl phthalate, n-octyl n-decyl phthalate, diisononyl phthalate, di(2-prpoylheptyl) phthalate, diisodecyl phthalate, diundecyl phthalate, diisoundecyl phthalate, ditridecyl phthalate, diisotridecyl phthalate, and mixtures thereof.

In embodiments, plasticizer, if added, is in an amount of 0 to 15, or 0.1 - 15, or 0.1 - 10, or 1 - 10, or 0.1 - 8, or 0.5 - 5 wt.%, based on total weight of the binder composition.

(Optional Wax): In embodiments, the binder composition further comprises wax selected from the group consisting of vegetable wax, petroleum derived wax, synthetic wax, and mixtures thereof. As with the plasticizer, the wax instead of being added to the binder composition, can be added directly to the TRM composition as one of the TRM components.

In embodiments, the wax is a petroleum wax selected from the group consisting of n-alkanes, iso-alkanes, napthenes, alkyl-substituted aromatic compounds, napthenesubstituted aromatic compounds, and mixtures thereof.

In embodiments, the wax is a synthetic wax selected from polyethylene, Fischer-Tropsch wax, and mixtures thereof. Examples of synthetic wax include ultra-high-molecular-weight polyethylene (UHMWPE), high-density polyethylene (HDPE), cross-linked polyethylene (PEX or XLPE), medium-density polyethylene (MDPE), linear low-density polyethylene (LLDPE), low-density polyethylene (LDPE), very-low-density polyethylene (VLDPE), and mixtures thereof.

In embodiments, wax, if added, is in amounts of 0 to 15, or 0.1 - 15, or 0.1 - 10, or 1 - 10, or 0.1 - 8, or 0.5 - 5 wt.%, based on total weight of the binder composition.

(Optional Elastomers): In embodiments, the binder composition further comprises at least an elastomer selected from the group consisting of natural rubber (NR), isoprene rubber (IR), styrene-butadiene rubber (SBR), styrenic block copolymers (SBC), chloroprene rubber (CR), butadiene rubber (BR), nitrile butadiene rubber (NBR), isobutyleneisoprene rubber (IIR), ethylene-propylene diene monomer (EPDM), urethane rubber (UR), silicone rubber (SR), fluorocarbon rubber (FR), ethyl vinyl acetate (EVA), graft copolymers of EVA with another monomer such as vinyl chloride, and mixtures thereof. The elastomer can be added directly to the TRM composition as one of the TRM components, instead of being added to the binder composition.

In embodiments, the elastomer is a styrenic block copolymer (SBC) which is any of linear, branched, or radial block copolymer having at least one block "S," and at least one block "R".

In embodiments, the SBC has a general configuration of: S-R-S, (S-R)ₙX, (S-R-S)ₙX, (S₁-R)_{d}X-ₑ(R-S₂), and mixtures thereof. X is a residue of a coupling agent and n is from 2 - 30, d is 1 - 30, and e is 1 - 30. Each block S, S₁, or S₂ is independently selected from vinyl aromatic units and is either hydrogenated or unhydrogenated. Each block "R" is a polymer block of a conjugated diene monomer and can be unhydrogenated, or partially or fully hydrogenated. Block "R" can be a copolymer block of a conjugated diene monomer and a vinyl aromatic monomer.

In embodiments, the vinyl aromatic monomer is selected from the group consisting of styrene, para-methylstyrene, para-ethyl styrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block S, S₁, or S₂ independently has a molecular weight (Mₚ) of 3 - 60, or 4 - 50, or 5 - 45, or 3 - 40 kg/mol. In embodiments, the Mₚ of blocks S₁ and S₂ differ by at least 20%, or by at least 23%, or by at least 25%, or by at least 28%.

In embodiments, each block "R" has a molecular weight (Mₚ) of 20 - 300, or 30 - 275, or 35 - 250, or > 25, or < 300 kg/mol.

In embodiments, the SBC has a diblock content of 1 - 60, or 3 - 50, or 1 - 45, or 1 - 40, or < 40 wt.%, based on total weight of the SBC.

In embodiments, the SBC has a vinyl aromatic unit content (VAC) of > 5, or < 25, or 5 - 30, or 10 - 25, or 5 - 20 wt.%, based on total weight of the SBC.

In embodiments, the SBC has a particle size of > 500 µm, or > 1000 µm, or > 1500 µm, or > 2,000 µm, or > 2500 µm, or 1 - 10 mm, or 1.5 - 8 mm, or 2 - 5 mm.

In embodiments, the SBC is selected from styrene-isoprene-styrene (S-I-S), styrene-isoprene/butadiene-styrene (S-I/B-S), styrene-ethylene/propylene/styrene-styrene (S-E/P-S-S), styrene-ethylene/butylene/styrene-styrene (S-E/B/S-S), and mixtures thereof.

The SBC can be functionalized (grafted) with at least one functional group, e.g., epoxy, acrylates, silanes, carboxylic acid, anhydride, ester, etc.

In embodiments, the elastomer, if added, is in amounts of 0 to 15, or 0.1 - 15, or 0.1 - 10, or 1 - 10, or 0.5 - 5, or 3 - 10 wt.%, based on total weight of the binder composition.

(Preparation of Binder Compositions): In embodiments, the binder composition is prepared as a pre-blend (or a masterbatch), containing the resin, the flow modifier, and optional components. The pre-blend can be obtained by mixing components (e.g., blending) for a period of 20 to 90 minutes at an ambient temperature (e.g., 25°C).

In another embodiment, the binder composition is prepared by first heating the resin at a temperature of 180 to 220°C for 30 to 90 minutes. The elastomer is then added and mixed in. Heating is continued for an additional 5 to 30 minutes. After heating, the mixing step is continued for another 20 to 60 minutes to obtain a homogeneous mixture. The mixture is then used to prepare the binder composition by adding the remaining components (excluding the hydrated aluminosilicate) at a temperature of 180 to 220°C for 10 to 30 minutes. If needed, the binder composition can be pelletized.

In embodiments, the binder composition is packaged in pelletized form, placed in bags, and shipped to TRM composition manufacturers. It is then added to other components to make the finished TRM composition.

(Thermoplastic Road Marking (TRM) Compositions): The binder composition is for use in the TRM composition. In embodiments, the TRM composition comprises: (a) 10 - 40 wt.% binder composition, (b) 15 - 80 wt.% filler, (c) 1 - 15 wt.% pigment, (d) 2 - 60 wt.% glass beads, and (e) 0 to 10 wt.% additives. The amounts of (a) to (e) are independently selected within the specified ranges such that the total of all components is 100 wt.%.

In embodiments with the bulk-modifying components as described above, e.g., wax, plasticizer, elastomer, etc., added during final blending (not in the binder concentrate itself), the TRM composition comprises: (a) 10 - 30 wt.% binder composition, (b) 5 - 20 wt.% elastomer, (c) 0.5 - 20 wt.% plasticizer, (d) 0 - 10 wt.% wax, (e) 1 - 15 wt.% pigment, (f) 20 - 50% fillers, (g) 2 - 60 wt.% glass beads, and (h) 0 to 10 wt.% additives. The amounts of (a) to (h) are independently selected within the specified ranges such that the total is 100 wt.%.

In another embodiments, a TRM composition comprises: (a) 5 - 27 wt.% resin, (b) 0.01 - 4 wt.% at least one flow modifier, (c) 15 - 80 wt.% filler, (d) 2 - 60 wt.% glass beads, (e) 1 - 15 wt.% pigment, (f) 0.5 - 5 wt.% plasticizer, (g) 0 - 10 wt.% wax, (h) 0 - 20 wt.% elastomer, and (i) 0 - 10 wt.% additives, based on total weight of the TRM composition. The amounts of (a) to (i) are independently selected within the specified ranges such that the total is 100 wt.%.

(Fillers): Filler is selected from the group consisting of sand, talc, dolomite, clay, sand, silica, mica, cracked stone, calcined flint, calcium carbonate (CaCO₃), crushed marble, wollastonite, feldspar, aluminum silicate, alumina, microcrystalline ceramic beads, barite, iron oxide, zinc oxide, magnesium oxide, zirconium oxide, aluminum hydroxide, magnesium hydroxide, calcium hydroxide, magnesium carbonate, barium sulfate, calcium sulfate, calcium sulfite, sodium sulfate, calcium silicate, calcium phosphate, magnesium phosphate, kaolin, glass powders, silicon nitride, quartz flour, volcanic pumice, diatomaceous earth, white carbon, and mixtures thereof.

(Glass beads): Glass beads are included in the TRM composition to enhance retro reflectivity and improve visibility of the markings, particularly under low-light or nighttime conditions. Glass beads can be pre-mixed into the composition and/or surface-applied during application to ensure optimal embedding and reflectance. Glass beads are typically spherical, transparent, or translucent, with a refractive index in the range of about 1.5 to 1.9.

In embodiments, glass beads are coated with a coupling agent (e.g., silanes) or an adhesion promoter, to improve bonding with the thermoplastic matrix and enhance durability under traffic wear. The particle size of glass beads can range from 50 to 850 µm and can be selected to ensure adequate surface exposure after application for efficient light reflection.

In embodiments, glass beads are added in amounts of 2 - 60, or 5 - 50, or 10 - 40, or 2 - 40, or > 2, or < 60 wt.%, based on total weight of the TRM composition.

(Pigments): Pigment is selected from titanium dioxide, cadmium, ultramarine, phthalo, viridian, iron(III) oxide, iron(II,III) oxide, chromium(III) oxide, lead chromate, zinc oxide, barium sulfate, antimony titanium yellow, ultramarine blue (complex sodium aluminosilicate with sulfur), and mixtures thereof, and selected based on desired color and can be added at the application site.

(Optional Additives): In embodiments, the TRM composition further comprises at least an additive selected from the group consisting of luminescent material (e.g., copper sulphide, zinc sulphide, etc.), fluorescent material, phosphorescent material, adhesion promoter, antioxidants, antiozonants, UV stabilizers, wetting agents, heat stabilizers, flow modifiers, antisettling agents, anti-blocking, color stabilizers, processing aids, anti-skid media / agent, and mixtures thereof.

In embodiments, additive (if added) is present in amounts of 0 - 10, or 0.1 - 5, or 0.5 - 3, or > 0.1, or < 10 wt.%, based on total weight of the TRM composition.

(Preparation of TRM Compositions): In embodiments, the TRM composition is prepared by combining a binder composition (pre-mix) with other components, e.g., fillers, glass beads, pigments, etc.

In another embodiment, the TRM composition is prepared directly (without the binder as a pre-mix) by combining components, e.g., resin, flow modifier, plasticizer, wax, elastomer, filler, glass beads, pigment, etc.

In embodiments, the components of the TRM composition are combined and heated at a temperature ranging from 170 - 220°C, or 175 - 215°C, or 180 - 210°C, or 185 - 210°C, or 190 - 215°C for a period of 30 minutes to 10 hours. The mixture is then cooled to an ambient temperature (e.g., 25°C) to obtain the TRM composition. The resulting composition can be used directly for marking road surfaces or stored for later use.

In embodiments with hydrated aluminosilicate as the flow modifier, it is added to other components directly to the preparation of the TRM composition. In other embodiments, the TRM composition is prepared by mixing all components of the binder composition, excluding the hydrated aluminosilicate, along with other additional components. The mixture is then heated at a temperature ranging from 170 - 220°C, or 175 - 215°C, or 180 - 210°C, or 185 - 210°C, or 190 - 215°C for a period of 30 minutes to 10 hours. During this stage, 0.01 to 4 wt.% of the hydrated aluminosilicate is gradually added to the mixture while mixing is continued. The resulting mixture is then cooled to ambient temperature (e.g., 25°C) to obtain the TRM composition.

The method used to pelletize the extruded binder compositions or TRM compositions depends on the types and characteristics of the components used to form the pellets. For example, pelletization techniques such as granulation, briquetting, extrusion, extrusion agglomeration, and mixing agglomeration can be employed. In embodiments, when extrusion agglomeration is used, the TRM composition can be pelletized directly from the reaction vessel.

The resulting pellets can vary in size, pigment, and refractive index, depending on the type and ratio of components in the raw material mixture. In embodiments, the pellets are formed to be relatively small-for instance, having a volume of < 50, or < 45, or < 40 cm³. In embodiments, at least 75% of the pellets have a volume of < 25 cm³, or at least 90% have a volume ranging from 0.125 to 4 cm³.

(Properties of Binder Compositions): In embodiments, the binder composition has a softening point of at least 60°C, or > 100°C, or < 170°C, or 80 - 170°C, or 90 - 150°C, measured according to ASTM E28.

(Properties of TRM Compositions): The TRM composition containing the binder composition possesses optimal performance with respect to storage stability, durability, and abrasion resistance, with a reduced apparent viscosity compared to compositions without the binder composition with flow modifier. The apparent viscosity described herein is measured using a rotational rheometer operated at 500 revolutions per minute (RPM) with a relative measuring geometry generating both radial- and downward axial flow. Unless specified otherwise, the apparent viscosity is measured at 200°C. The flexural modulus, flexural strength, flexural strain, and toughness described herein (and in the Examples) are measured according to the Modified Three-Point Bend test.

In embodiments, the TRM composition has an apparent viscosity at 180°C of < 12500, or > 2500, or 2500 - 12500, or 2600 - 10000, or 2700 - 8000, or 2700 - 4500 mPa·s.

In embodiments, the TRM composition has an apparent viscosity of < 6000, or < 3000, or > 1200, or 1200 - 6000, or 1300 - 5000, or 1350 - 4000, or 1400 - 2600 mPa·s.

In embodiments, the TRM composition exhibits an apparent viscosity reduction at 180°C of at least 10%, or > 12% or > 15%, or < 80%, or 10 - 80%, or 10 - 50%, or 20 - 70%, compared to a TRM composition without the flow modifier.

In embodiments, the TRM composition exhibits an apparent viscosity reduction of at least 5%, or > 7% or > 10%, or < 60%, or 5 - 60%, or 5 - 50%, or 5 - 40%, compared to a TRM composition without the flow modifier.

In embodiments, the TRM composition has a softening point of > 80°C, or < 150°C, or 100 - 115°C, or 102 - 112°C, or 103 - 110°C, or 102 - 107°C, measured according to ASTM E28.

In embodiments, the TRM composition has a flexural modulus of < 10.0, or > 1.0, or 1.0 - 10.0, or 1.1 - 5.0, or 1.2 - 4.0 GPa.

In embodiments, the TRM composition has a flexural strength of < 15, or > 4, or 4 - 20, or 5 - 15, or 4 - 10 MPa.

In embodiments, the TRM composition has a flexural strain at break of > 0.15, or > 0.3%, or < 10.0%, or 0.3 - 10.0%, or 0.35 - 5.0%, or 0.35 - 2.5%,.

In embodiments, the TRM composition has a toughness of > 10, or > 25, or < 150, or 25 - 150, or 25 - 130, or 25 - 110 mJ.

In embodiments, the TRM composition has a yellowness index of < 12, or < 10, or > 3, or 3 - 12, or 5 - 10, or 7 - 11, measured according to ASTM E313.

In embodiments, the TRM composition is applied (before drying) at a thickness of 1 - 25 mm, or 2 - 15 mm, or 1 - 15 mm, or 3 - 20 mm. After drying, a thickness of the TRM film can be from 0.5 - 15 mm, or 1 - 12 mm, or 2 - 10 mm.

(Applications): The TRM composition is suitable for use in commercially available spray road marking equipment including spray guns, airless or atomized, both bleeder and non-bleeder types, with internal or external air mix. The TRM composition can be used in spray foam applications.

The TRM composition can be used to mark routes, highways, airport runways, exit and entry ramps, passes, pavements, sidewalks, parking lots for vehicles, etc.

The TRM composition can be suitable for use as an exterior coating over metal and wood substrate in addition to general asphalt and concrete surfaces.

(Analytical Methods): The resin in the binder composition can be detected using Fourier-transform infrared spectroscopy (FTIR) or nuclear magnetic resonance (NMR) spectroscopy for functional group analysis.

Flow modifiers, such as hydrated aluminosilicates, can be identified by thermogravimetric analysis (TGA) to determine water content (e.g., 5-50 wt.% bound water), and by X-ray diffraction (XRD) or scanning electron microscopy with energy-dispersive X-ray spectroscopy (SEM-EDS) to confirm the presence of aluminosilicate structures and elemental content (e.g., Al, Si, O). Surfactants, if present as flow modifier, can be detected using liquid chromatography-mass spectrometry (LC-MS) or GC-MS, and their molar masses can be determined accordingly.

Other components, e.g., plasticizers, wax, elastomers, etc., can be identified using thermal methods (e.g., differential scanning calorimetry (DSC), TGA), chromatography (e.g., GC-MS for plasticizers and wax), and FTIR or pyrolysis-GC-MS (for thermoplastic elastomers such as SBS or EVA). The quantity of each component can be estimated gravimetrically after selective separation or via quantitative NMR using internal standards.

Glass beads can be detected by optical microscopy and scanning electron microscopy (SEM) coupled with energy-dispersive X-ray spectroscopy (EDS) to detect their silica-based composition and particle morphology. Pigments can be identified and quantified via X-ray fluorescence (XRF) or UV-visible diffuse reflectance spectroscopy.

To assess the viscosity-reducing effect of the flow modifier, the apparent viscosity of the sample can be measured as described in the Examples. A control sample, prepared using the same formulation but without the flow modifier, can be used for comparison under identical test conditions.

(Examples): The following illustrative examples are non-limiting.

The following test methods are used.

The apparent viscosity of the TRM composition is measured using a rotational rheometer equipped with a relative measuring geometry that generates both radial and downward axial flow (e.g., ST24-2D-12/RVA spindle), operated at 500 revolutions per minute (RPM), under steady-state shear conditions over a temperature range of 150 to 220°C, using a constant temperature ramp rate of 3.5°C per minute. Values at 180°C and 200°C are reported, with apparent viscosity in millipascal-seconds (mPa·s).

Flexural modulus, flexural strength, flexural strain, and toughness are measured according to the Modified Three-Point Bend.

The components used in examples include:

Resin-1 is a rosin ester having softening point of 102°C, Gardner color of 3.9 (measured with 50 wt.% concentration in toluene), acid value of 8 mg KOH/g, and T_{g} of 50°C, available from Kraton Corp.

Wax-1 is a low density polyethylene (LDPE) having density of 0.93, hardness 1.0 measured at 25°C, viscosity of 450 mPa.s measured at 140°C, and a drop point of 113°C, from Honeywell.

Wax-2 is a polyethylene wax having density of 0.91 to 0.96 g/cm³, drop point of 110 to 120°C, acid value of 0 mg KOH/g, viscosity of 80 mPa.s at 140°C, penetration of 3 to 7 mm*10⁻¹, from Deurex.

Plasticizer-1 is a mineral oil.

Elastomer-1 is an unsaturated styrene-isoprene-styrene triblock copolymer having a block "S" Mₚ of 11 kg/mol, vinyl aromatic unit content of 15 wt.%, Mₚ of block copolymer of 222 kg/mol, coupling efficiency of 81%, and diblock content of 19 wt.%.

Filler-1 is CaCO₃.

Filler-2 is a quartz flour available from Sibelco.

Pigment-1 is titanium dioxide.

Surfactant-1 is 2-octadec-9-enoxyethanol,phosphoric acid having a molar mass of 410 g/mol.

Surfactant-2 is octadecanoic acid, reaction product with tetraethylenepentamine having a molar mass of 473 g/mol.

Surfactant-3 is n-octyltriethoxysilane (nOTES) having a molar mass of 276 g/mol and a solid content of 100%.

Surfactant-4 is vinylbenzyl-aminoethyl-aminopropyl-trimethoxysilane having a molar mass of 374 g/mol and a solid content of 40%.

Surfactant-5 is titanium IV 2, 2(bis 2-propenolatomethyl)butanolato, tris(dodecyl)benzenesulfonato-O having a molar mass of 1237 g/mol and a solid content of 78%.

Surfactant-6 is titanium IV bis(dioctyl)pyrophosphato-O, oxoethylenediolato, (adduct), (dioctyl) (hydrogen)phosphite having a molar mass of 1207 g/mol and a solid content of 99%.

Surfactant-7 is Tall oil fatty acid (TOFA)

HA-1 is hydrated aluminosilicate having 20 wt.% of water, density of 2.0 g/cm³, compaction density of 500 g/l, pH value (5% water) of 11.6, and average particle size of 380 µm.

(Example 1): Preparation of binder compositions. The components in Table 1 are mixed and heated at 200°C for 30 minutes. The mixture is then further agitated using a mixing tool at 200°C, and subjected to an additional 30 minutes of heating at the same temperature. Afterwards, the mixture is cooled to ambient temperature (e.g., 25°C) for storage or immediate use in TRM compositions.

**Table 1**

| Components (wt.%) | Ex.1a | Ex.1b | Ex.1c | Ex.1d | Ex.1e | Ex.1f | Ex.1g | Ex.1h |
|---|---|---|---|---|---|---|---|---|
| Resin-1 | 78.98 | 78.58 | 78.58 | 77.76 | 77.37 | 77.37 | 77.37 | 77.37 |
| Wax-1 | 8.74 | 8.70 | 8.70 | 8.60 | 8.56 | 8.56 | 7.56 | 7.56 |
| Plasticizer-1 | 12.28 | 12.22 | 12.22 | 12.09 | 12.03 | 12.03 | 10.03 | 10.03 |
| Elastomer-1 | | | | | | | 4.54 | 3.49 |
| Surfactant-1 | - | 0.5 | - | - | 0.49 | - | 0.5 | - |
| Surfactant-2 | - | - | 0.5 | - | - | 0.49 | - | - |
| HA-1 | - | - | - | 1.55 | 1.55 | 1.55 | - | 1.55 |

(Example 2): Preparation of TRM compositions. Binder compositions from example 1, along with other components, were combined to obtain a homogeneous mixture. Melt processing is initiated by preheating the mixture at 190 to 210°C for 30 minutes without mixing. This is followed by continued melt processing for an additional 30 minutes to 1 hour at a temperature range of 195 to 205°C. The components and their respective amounts are presented in Table 2.

**Table 2**

| Components (wt.%) | Ex.2a | Ex.2b | Ex.2c | Ex.2d | Ex.2e | Ex.2f | Ex.2g | Ex.2h |
|---|---|---|---|---|---|---|---|---|
| Binder composition | 19.0 (Ex.1a) | 19.07 (Ex.1b) | 19.07 (Ex.1c) | 19.3 (Ex.1d) | 19.37 (Ex.1e) | 19.37 (Ex.1f) | 19.37 (Ex.1g) | 19.37 (Ex.1h) |
| Glass beads | 10.0 | 9.99 | 9.99 | 10.0 | 9.99 | 9.99 | 9.99 | 9.99 |
| Filler-1 | 66.0 | 65.94 | 65.94 | 65.7 | 65.64 | 65.64 | 65.64 | 65.64 |
| Pigment-1 | 5.0 | 5.0 | 5.0 | 5.0 | 5.0 | 5.0 | 5.0 | 5.0 |

(Examples 3-4): Preparation of TRM compositions. The components of the TRM composition (excluding hydrated aluminosilicate, if used) were mixed and melt processed for 30 minutes at a temperature of 190 to 210°C. Mixing was then continued for an additional 45 minutes at a temperature between 195°C to 205°C, during which a predetermined amount of hydrated aluminosilicate was added. The TRM composition was subsequently cooled to 25°C for property evaluation. Details of TRM compositions and the corresponding properties are presented in tables 3 and 4. Examples CEx.1 and CEx.2 are comparative examples.

**Table 3**

| Components (wt.%) / Properties | CEx.1 | Ex.3a | Ex.3b | Ex.3c | Ex.3d | Ex.3e | Ex.3f | Ex.3g | Ex.3h | Ex.3i | Ex.3j |
|---|---|---|---|---|---|---|---|---|---|---|---|
| Resin-1 | 15.00 | 14.99 | 14.99 | 15.00 | 14.99 | 14.99 | 14.99 | 14.99 | 14.99 | 14.99 | 14.99 |
| Wax-1 | 1.66 | 1.66 | 1.66 | 1.66 | 1.66 | 1.66 | 1.66 | 1.66 | 1.66 | 1.66 | 1.66 |
| Plasticizer-1 | 2.33 | 2.33 | 2.33 | 2.33 | 2.33 | 2.33 | 2.33 | 2.33 | 2.33 | 2.33 | 2.33 |
| Glass beads | 10.00 | 9.99 | 9.99 | 10.00 | 9.99 | 9.99 | 9.99 | 9.99 | 9.99 | 9.99 | 9.99 |
| Filler-1 | 66.01 | 65.94 | 65.94 | 65.71 | 65.64 | 65.64 | 65.94 | 65.94 | 65.94 | 65.94 | 65.94 |
| Pigment-1 | 5.00 | 5.00 | 5.00 | 5.00 | 5.00 | 5.00 | 5.00 | 5.00 | 5.00 | 5.00 | 5.00 |
| HA-1 | - | - | - | 0.30 | 0.30 | 0.30 | - | - | - | - | - |
| Surfactant-1 | - | 0.09 | 0 | 0 | 0.09 | 0 | - | - | - | - | - |
| Surfactant-2 | - | - | 0.09 | - | - | 0.09 | - | - | - | - | - |
| Surfactant-3 | - | - | - | - | - | - | - | - | - | - | 0.09 |
| Surfactant-4 | - | - | - | - | - | - | - | - | - | 0.09 | - |
| Surfactant-5 | - | - | - | - | - | - | - | 0.09 | - | - | - |
| Surfactant-6 | - | - | - | - | - | - | - | - | 0.09 | - | - |
| Surfactant-7 | - | - | - | - | - | - | 0.09 | - | - | - | - |
| Properties | | | | | | | | | | | |
| Apparent viscosity at 180°C (mPa·s) | 4366 | 3503 | 3966 | 3819 | 3268 | 3745 | 2720 | 3412 | 3792 | 3799 | 3454 |
| Apparent Viscosity at 200°C (mPa·s) | 2501 | 1946 | 2292 | 2125 | 1783 | 2091 | 1593 | 2059 | 2292 | 2300 | 2061 |
| Softening point (°C) | 105 | 104 | 105 | 105 | 106 | 105 | 104 | 105 | 106 | 106 | 107 |
| Flexural Modulus (GPa) | 2.3 | 2.1 | 1.7 | 2.2 | 2 | 1.9 | 1.45 | 1.25 | 1.39 | 1.52 | 1.14 |
| Flexural Strength (Mpa) | 8.4 | 8.3 | 7.4 | 8.5 | 9.5 | 7.8 | 6.7 | 6.5 | 6.5 | 7.8 | 7.6 |
| Flexural Strain at Break (%) | 0.5 | 0.6 | 0.6 | 0.5 | 0.8 | 0.7 | 0.7 | 0.8 | 0.7 | 0.9 | 1.9 |
| Toughness (mJ) | 25 | 29 | 27 | 26 | 44 | 31 | 28 | 32 | 27 | 42 | 106 |

**Table 4**

| Component (wt.%) / Properties | CEx.2 | Ex.4a | Ex.4b | Ex.4c | Ex.4d | Ex.4e | Ex.4f | Ex.4g |
|---|---|---|---|---|---|---|---|---|
| Resin-1 | 15.00 | 14.99 | 14.99 | 14.99 | 14.99 | 14.99 | 14.99 | 14.99 |
| Wax-2 | 1.66 | 1.66 | 1.66 | 1.66 | 1.66 | 1.66 | 1.66 | 1.66 |
| Plasticizer-1 | 2.33 | 2.33 | 2.33 | 2.33 | 2.33 | 2.33 | 2.33 | 2.33 |
| Glass beads | 10.00 | 9.99 | 9.99 | 9.99 | 9.99 | 9.99 | 9.99 | 9.99 |
| Pigment-1 | 5.00 | 5.00 | 5.00 | 5.00 | 5.00 | 5.00 | 5.00 | 5.00 |
| Filler-2 | 66.00 | 65.94 | 65.94 | 65.94 | 65.94 | 65.94 | 65.94 | 65.94 |
| Surfactant-1 | - | 0.09 | - | - | - | - | - | - |
| Surfactant-2 | - | - | 0.09 | - | - | - | - | - |
| Surfactant-3 | - | - | - | - | - | - | - | 0.09 |
| Surfactant-4 | - | - | - | - | - | - | 0.09 | - |
| Surfactant-5 | - | - | - | - | 0.09 | - | - | - |
| Surfactant-6 | - | - | - | - | - | 0.09 | - | - |
| Surfactant-7 | - | - | - | 0.09 | - | - | - | - |
| Properties | | | | | | | | |
| Apparent viscosity at 180°C (mPa·s) | 3614 | 2653 | 2801 | 3134 | 2607 | 2772 | 2711 | 3592 |
| Apparent viscosity at 200°C (mPa·s) | 2369 | 1530 | 1556 | 2049 | 1597 | 1590 | 1737 | 2233 |
| Softening point (°C) | 108 | 98.5 | 102 | 103 | 101 | 100 | 104.5 | 102 |
| Flexural Modulus (GPa) | 2.3 | 2.1 | 2.1 | 2.0 | 1.5 | 2.0 | 2.0 | 1.8 |
| Flexural Strength (Mpa) | 4.9 | 4.9 | 4.9 | 5.0 | 5.5 | 4.0 | 5.0 | 5.0 |
| Flexural Strain at Break (%) | 0.35 | 0.38 | 0.38 | 0.40 | 0.6 | 0.36 | 0.39 | 0.46 |
| Toughness (mJ) | 6.8 | 7.0 | 7.5 | 7.6 | 14.0 | 5.8 | 7.4 | 9.8 |
| Yellowness Index (YI) | 9.41 | 7.72 | 9.12 | 9.00 | 10.42 | 9.83 | 7.91 | 9.18 |

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A binder composition consisting essentially of:
(a) 65 to 99.95 wt.% of a resin selected from the group consisting of aliphatic hydrocarbon resins (C5), aromatic hydrocarbon resins (C9), rosin resins, rosin esters, alkyd resins, and mixtures thereof;
(b) 0.05 to 10 wt.% of at least one flow modifier selected from:
(i) a hydrated aluminosilicate having 5 to 50 wt.% of water, and
(ii) a surfactant selected from the group consisting of acid-functional surfactants, amine-functional surfactants, metal-containing surfactants, metalloid-containing surfactants, and mixtures thereof,
wherein the surfactant has a molar mass of 200 to 2000 g/mol; and
(c) 0 to 15 wt.% of a plasticizer;
(d) 0 to 15 wt.% of wax; and
(e) 0 to 15 wt.% of an elastomer; based on total weight of the binder composition.

2. The binder composition of claim 1, wherein the binder composition, when incorporated into a thermoplastic road marking composition, results in the thermoplastic road marking composition having an apparent viscosity that is at least 10% lower than that of a thermoplastic road marking composition without the flow modifier, measured at 180°C using a rotational rheometer operated at 500 revolutions per minute (RPM) with a relative measuring geometry generating both radial- and downward axial flow.

3. The binder composition of any of claims 1-2, wherein the flow modifier is a hydrated aluminosilicate having 5 to 35% of water, and wherein the hydrated aluminosilicate has at least one of:
an average particle size of 1 to 500 µm; and
a density of 1.0 to 2.5 g/cm³.

4. The binder composition of any of claims 1-2, wherein the flow modifier is a surfactant having a molar mass of 250 to 1400 g/mol.

5. The binder composition of claim 4, wherein the surfactant is selected from the group consisting of 2-octadec-9-enoxyethanol phosphoric acid; tall oil fatty acid (TOFA); octadecanoic acid reaction product with tetraethylenepentamine; titanium IV 2, 2(bis 2-propenolatomethyl)butanolato; titanium IV bis(dioctyl)pyrophosphato-O, oxoethylenediolato, (adduct), (dioctyl) (hydrogen)phosphite; octyltriethoxysilane; vinylbenzylaminoethylaminopropyltrimethoxysilane, and mixtures thereof.

6. The binder composition of any of claims 1-5, wherein the resin is a rosin ester.

7. The binder composition of claim 6, wherein the rosin ester has at least one of:
a softening point of 80 to 115°C, measured according to ASTM E28;
an acid value of 1 to 50 mg KOH/g, measured according to ASTM D465;
a glass transition temperature (T_{g}) of 30 to 80°C, measured by differential scanning calorimetry (DSC); and
a Gardner color of 0 to 5.0, measured according to ASTM D6166.

8. A thermoplastic road marking composition comprising:
(a) 10 to 40 wt.% of the binder composition of any of claims 1-7;
(b) 15 to 80 wt.% of filler;
(c) 1 to 15 wt.% of a pigment;
(d) 2 to 60 wt.% of glass beads; and
(e) 0 to 10 wt.% of at least one additive,
all based on total weight of the thermoplastic road marking composition.

9. A thermoplastic road marking composition comprising:
(a) 5 to 27 wt.% of a resin selected from the group consisting of aliphatic hydrocarbon resins (C5), aromatic hydrocarbon resins (C9), rosin resins, rosin esters, alkyd resins, and mixtures thereof;
(b) 0.01 to 4 wt.% of at least one flow modifier selected from:
(i) a hydrated aluminosilicate having 5 to 50 wt.% of water, and
(ii) a surfactant having a molar mass of 200 to 2000 g/mol, wherein the surfactant is selected from the group consisting of acid-functional surfactants, amine-functional surfactants, metal-containing surfactants, metalloid-containing surfactants, and mixtures thereof,
(c) 15 to 80 wt.% of filler;
(d) 2 to 60 wt.% of glass beads;
(e) 1 to 15 wt.% of a pigment;
(f) 0.5 to 20 wt.% of a plasticizer;
(g) 0 to 10 wt.% of wax;
(h) 0 to 10 wt.% of an elastomer; and
(i) 0 to 10 wt.% of at least one additive,
all based on total weight of the thermoplastic road marking composition;
wherein the thermoplastic road marking composition has an apparent viscosity at least 10% lower than that of a thermoplastic road marking composition without the flow modifier, as measured at 180°C using a rotational rheometer operated at 500 revolutions per minute (RPM) with a relative measuring geometry generating both radial- and downward axial flow.

10. The thermoplastic road marking composition of claim 9, wherein the flow modifier is a hydrated aluminosilicate having 5 to 35 wt.% of water; and wherein the hydrated aluminosilicate has at least one of:
an average particle size of 1 to 500 µm; and
a density of 1.0 to 2.5 g/cm³.

11. The thermoplastic road marking composition of claim 9, wherein the flow modifier is a surfactant having a molar mass of 250 to 1400 g/mol.

12. The thermoplastic road marking composition of any of claims 9-11, wherein the thermoplastic road marking composition has at least one of:
an apparent viscosity at 180°C of < 12500 mPa·s, and
an apparent viscosity at 200°C of < 6000 mPa·s,
the apparent viscosity is measured using a rotational rheometer operated at 500 revolutions per minute (RPM) with a relative measuring geometry generating both radial- and downward axial flow.

13. The thermoplastic road marking composition of any of claims 9-11, wherein the thermoplastic road marking composition has an apparent viscosity of 10 to 50% lower than that of a thermoplastic road marking composition without the flow modifier, measured at 180°C using a rotational rheometer operated at 500 revolutions per minute (RPM) with a relative measuring geometry generating both radial- and downward axial flow.

14. The thermoplastic road marking composition of any of claims 9-13, wherein the thermoplastic road marking composition has at least one of:
a softening point of > 80°C, measured according to ASTM E28; and
a yellowness index of < 12, measured according to ASTM E313.

15. The thermoplastic road marking composition of any of claims 9-13, wherein the thermoplastic road marking composition has at least one of:
a flexural modulus of < 10.0 GPa;
a flexural strength of < 15 MPa;
a flexural strain at break of > 0.15%; and
a toughness of > 10 mJ;
all measured according to Modified Three-Point Bend test.
